# EUROPEAN PATENT APPLICATION

(11) **EP 4 726 512 A1**
(43) Date of publication of application: **15.04.2026**
(21) Application number: 24867517.5
(22) Date of filing: 19.09.2024
(51) Int. Cl.: G06F 3/0481

(54) **SYSTEM CONTROL OPERATION METHOD AND ELECTRONIC DEVICE**

(30) Priority: 22.09.2023 CN 202311240687
(71) Applicant: Huawei Technologies Co., Ltd., Shenzhen, Guangdong 518129 (CN)
(72) Inventor: YANG, Zheng, Shenzhen, Guangdong 518129 (CN); LIU, Cheng, Shenzhen, Guangdong 518129 (CN); DING, Fei, Shenzhen, Guangdong 518129 (CN); LI, Yinghao, Shenzhen, Guangdong 518129 (CN)
(74) Representative: Thun, Clemens
(86) International application number: PCT/CN2024/119861
(87) International publication number: WO 2025/061112

(57) **Abstract**

This application provides a system control operation method and an electronic device. An operating system of the electronic device may provide intelligent capabilities such as a content search capability, a content generation capability, and a task recognition capability for an upper-layer application, so that the upper-layer application can provide corresponding intelligent services. A flag attribute is added to a system control provided by the operating system. Different attribute values of the flag attribute may correspond to different intelligent capabilities. A developer of any application may set the flag attribute for the system control, and develop, by utilizing an intelligent capability integrated into the operating system, the application into an intelligent application that can provide an intelligent service, and the developer does not need to spend time and energy in building the foregoing intelligent capability. This can help the developer develop applications that meet diversified requirements of users, greatly reduce a workload of the developer, and improve development efficiency of the developer.

## Description

This application claims priority to Chinese Patent Application No. 202311240687.1, filed with the China National Intellectual Property Administration on September 22, 2023 and entitled "SYSTEM CONTROL OPERATION METHOD AND ELECTRONIC DEVICE", which is incorporated herein by reference in its entirety.

### TECHNICAL FIELD

This application relates to the field of terminal technologies, and in particular, to a system control operation method and an electronic device.

### BACKGROUND

In a process of using an electronic device, a user usually needs to perform information searching and text editing processing on the electronic device. The information searching may include searching for related information in data stored on the electronic device and/or data stored on a cloud. The text editing processing may include re-creation processing such as rewriting, expansion, and summarization on a target text.

To meet the foregoing requirement of using the electronic device by the user, when developing an application, a developer usually needs to obtain multi-party permission and collect multi-party information (for example, collect various files and information stored locally or on the cloud by the user, and habits and preferences of the user for text editing), and further needs to perform complex service logic processing on the collected information to provide a function that meets the requirement of the user. This results in a heavy development workload of the developer.

### SUMMARY

This application provides a system control operation method and an electronic device. Based on intelligent capabilities such as a content search capability, a content generation capability, and a task recognition capability of an operating system, the method can assist an APP developer in developing an APP that can provide an intelligent service, to reduce a development workload of the developer and improve development efficiency of the developer.

According to a first aspect, this application provides a system control operation method. The method may be applied to an electronic device including a first application and a second application. The electronic device implements a first function in response to a first operation on a first system control included in the first application, where the first system control has a first attribute value, the first attribute value corresponds to the first function, and the first function includes a content search function, a task recognition function, or a content generation function; and the electronic device implements the first function in response to a second operation on a second system control included in the second application, where the second system control has the first attribute value.

Both the first system control and the second system control may be one of system controls such as a text box, an edit box, and a button. For example, for the first system control and the second system control, refer to the edit box 411 shown in FIG. 4A, or the smart write control 513A shown in FIG. 5A, or a control in the task option box 514 shown in FIG. 5B, or the AI edit box 612 shown in FIG. 6B in this application. The first attribute value may be AI search, or AI generate, or AI action. The first attribute value may be an attribute value corresponding to a flag attribute in the system control.

It can be learned that when system controls in different applications all have the first attribute value, the system controls can all provide an intelligent service (namely, the first function). When performing development, a developer of any application may set an attribute value (for example, the first attribute value) corresponding to an intelligent service for a system control, so that the system control can provide a corresponding intelligent service. The foregoing development operation of setting an attribute value for the system control is simple and convenient. This can help the developer develop applications that meet diversified requirements (such as an information searching requirement and a text editing requirement) of users, greatly reduce a workload of the developer, and improve development efficiency of the developer.

With reference to the first aspect, in some embodiments, an operating system of the electronic device has a first capability, the first capability is used to implement the first function, the first attribute value is associated with the first capability, and the electronic device may invoke the first capability, to implement the first function.

The first capability may be an intelligent capability, for example, a content search capability, a content generation capability, or a task recognition capability. The operating system of the electronic device may provide, for an upper-layer application, an interface used for invoking an intelligent capability like the first capability. When the first operation performed on the first system control is detected, the first application on the electronic device may invoke the first capability through a corresponding interface, to implement the first function. When the second operation performed on the second system control is detected, the second application on the electronic device may invoke the first capability through a corresponding interface, to implement the first function.

It can be learned that when the system control has an attribute value associated with an intelligent capability, the application may invoke the corresponding intelligent capability based on an operation performed on the system control, to provide the corresponding intelligent service. Therefore, when performing development, the developer of any application may set, for the system control, an attribute value associated with an intelligent capability, that is, the system control can provide a corresponding intelligent service based on the intelligent capability of the operating system. The developer of the application does not need to spend a lot of time and energy in building the foregoing intelligent capability, but only needs to utilize an intelligent capability integrated into the operating system to develop, into an intelligent application that can provide an intelligent service, the application developed by the developer. The foregoing method can help the developer develop applications that meet diversified requirements (such as an information searching requirement and a text editing requirement) of users, greatly reduce a workload of the developer, and improve development efficiency of the developer.

With reference to the first aspect, in some embodiments, the first system control has a second attribute value, the second attribute value corresponds to a second function, the second function is different from the first function, and the second function includes the content search function, the task recognition function, or the content generation function; and the electronic device implements the second function in response to a second operation on the first system control.

It can be learned that an attribute value corresponding to a plurality of intelligent services may be set for one system control. In other words, one system control can provide a plurality of intelligent services for the user. For example, if a system control has attribute values: AI search and AI generate, the system control can provide both the content search function and the content generation function. The system control can effectively improve user experience of text editing or information searching.

With reference to the first aspect, in some embodiments, the operating system of the electronic device has a second capability, the second capability is used to implement the second function, the second attribute value is associated with the second capability, and the electronic device implements the second function, where the electronic device invokes the second capability, to implement the second function.

The second capability may be an intelligent capability, for example, a content search capability, a content generation capability, or a task recognition capability. The operating system of the electronic device may provide, for an upper-layer application, an interface used for invoking an intelligent capability like the second capability.

It can be learned that when the system control has an attribute value associated with an intelligent capability, the application may invoke the corresponding intelligent capability based on an operation performed on the system control, to provide the corresponding intelligent service. Therefore, when performing development, the developer of any application may set, for the system control, an attribute value associated with an intelligent capability, that is, the system control can provide a corresponding intelligent service based on the intelligent capability of the operating system. The developer of the application does not need to spend a lot of time and energy in building the foregoing intelligent capability, but only needs to utilize an intelligent capability integrated into the operating system to develop, into an intelligent application that can provide an intelligent service, the application developed by the developer. The foregoing method can help the developer develop applications that meet diversified requirements (such as an information searching requirement and a text editing requirement) of users, greatly reduce a workload of the developer, and improve development efficiency of the developer.

With reference to the first aspect, in some embodiments, the first function is the content search function; and the electronic device determines a query statement in response to the first operation, and obtains first content through searching based on the query statement; and the electronic device displays the first content.

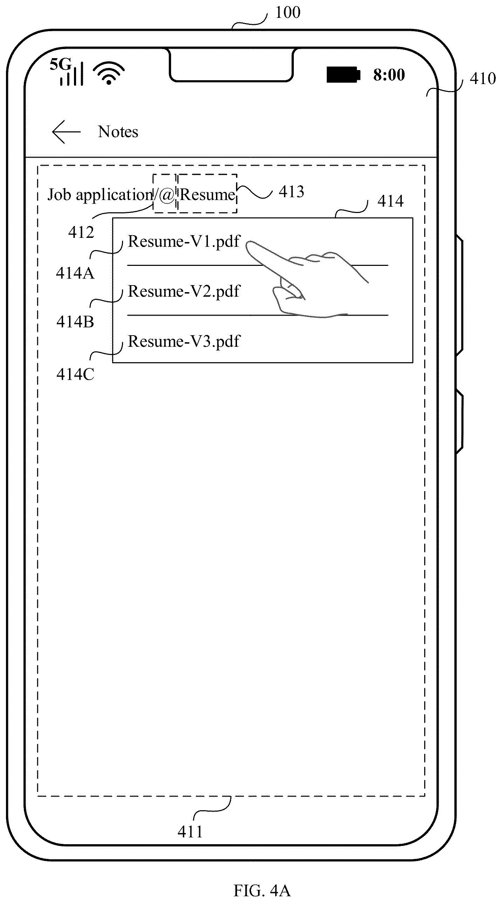

When the first function is the content search function, for the first operation, refer to an operation (for example, an operation of entering the preset symbol 412 in the edit box 411) used for query triggering shown in FIG. 4A, and an operation (for example, an operation of entering the text 413 after the preset symbol 412) of entering a query statement in this application. For the query statement, refer to the text 413 shown in FIG. 4A.

The electronic device may determine a semantic vector of the query statement by using a language model, and find, from a semantic vector database based on the semantic vector of the query statement, one or more semantic vectors most similar to the semantic vector of the query statement. The first content may be a file or text content corresponding to the most similar one or more semantic vectors.

For displaying the first content by the electronic device, refer to displaying a search result in the list box 414 shown in FIG. 4A in this application.

It can be learned that, when the first system control can provide the content search function, in a process of text editing in the first system control, the user may enter the query statement in the first system control at any time, to query information needed by the user, and does not need to exit a text editing interface to search for the information. In addition, the electronic device may insert the found content into the first system control. The content search function can help the user quickly search for the needed information during text editing, and reduce a case in which a text editing idea of the user is interrupted due to information searching. The foregoing method can effectively improve user experience of text editing and improve efficiency of text editing of the user.

With reference to the first aspect, in some embodiments, the first function is the task recognition function, and the electronic device obtains a first text in response to the first operation, and determines one or more task types used to process the first text, where the task type includes one or more of the following: expansion, rewriting, summarization, translation, insertion, and meeting minutes; and the electronic device displays an option corresponding to the one or more task types.

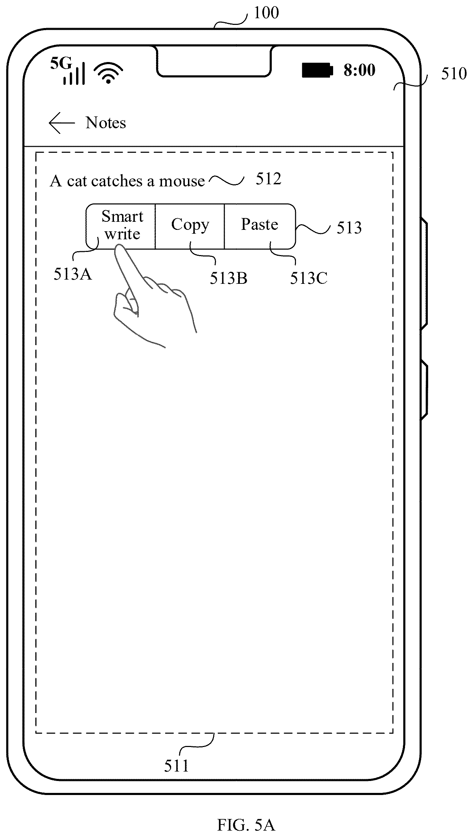

When the first function is the task recognition function, for the first operation, refer to an operation on the smart write control 513A shown in FIG. 5A in this application. For the first text, refer to the text 512 shown in FIG. 5A in this application. The first text may be selected by the user, or may be intelligently selected by the electronic device.

The electronic device may determine, by using the language model, one or more task types applicable to processing of the first text.

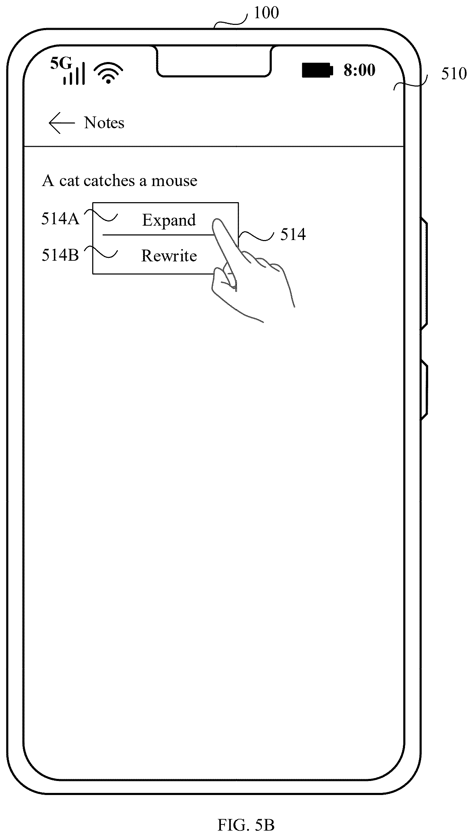

For the option, displayed by the electronic device, corresponding to the one or more task types, refer to a control displayed in the task option box 514 shown in FIG. 5B in this application.

It can be learned that the electronic device may estimate, based on the first text, a requirement of the user for processing the first text, to provide, for the user, a proper task type used for processing the first text. In this way, when the user needs to process the first text in a text editing process, the user can quickly find a needed task type to process the first text, and does not need to search for the needed task type one by one in a large quantity of task types. This can improve user experience of text editing.

With reference to the first aspect, in some embodiments, the first function is the content generation function, the first system control indicates a first task type, the first task type includes expansion, rewriting, summarization, translation, or meeting minutes, and the electronic device obtains a second text in response to the first operation, and processes the second text based on the first task type, to generate a third text; and the electronic device displays the third text.

For example, if the first task type is expansion, for the first system control, refer to the expand control 514A shown in FIG. 5B in this application. If the first task type is rewriting, for the first system control, refer to the rewrite control 514B shown in FIG. 5B in this application. When the first function is the content generation function, for the first operation, refer to an operation on the expand control 514A shown in FIG. 5B in this application.

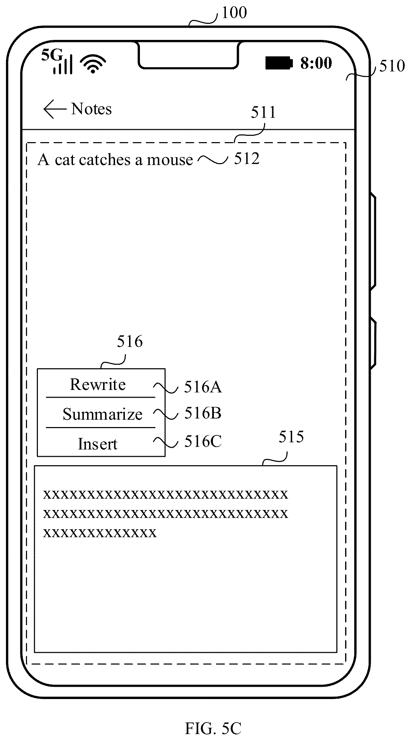

For the second text, refer to the text 512 shown in FIG. 5A, or a text in the edit box 515 shown in FIG. 5C in this application. The second text may be selected by the user, or may be intelligently selected by the electronic device.

The electronic device may process the second text based on the first task type by using the language model.

It can be learned that, in a process of editing text, the user may select a corresponding text at any time to perform processing such as expansion, rewriting, summarization, or translation, and does not need to exit a text editing interface to perform re-creation on the existing text. This can improve efficiency of text editing of the user.

According to a second aspect, this application provides an electronic device. The electronic device may include a memory and a processor. The memory may be configured to store a computer program. The processor may be configured to invoke the computer program, to enable the electronic device to perform the method according to any possible implementation of the first aspect.

According to a third aspect, this application provides a computer-readable storage medium, including instructions. When the instructions are run on an electronic device, the electronic device is enabled to perform the method according to any possible implementation of the first aspect.

According to a fourth aspect, this application provides a computer program product. The computer program product may include computer instructions. When the computer instructions are run on an electronic device, the electronic device is enabled to perform the method according to any possible implementation of the first aspect.

According to a fifth aspect, this application provides a chip. The chip is used in an electronic device. The chip includes one or more processors. The processor is configured to invoke computer instructions, so that the electronic device performs the method according to any possible implementation of the first aspect.

It may be understood that the electronic device provided in the second aspect, the computer-readable storage medium provided in the third aspect, the computer program product provided in the fourth aspect, and the chip provided in the fifth aspect are all configured to perform the method provided in embodiments of this application. Therefore, for beneficial effect that can be achieved, refer to beneficial effect in the corresponding method. Details are not described herein again.

### BRIEF DESCRIPTION OF DRAWINGS

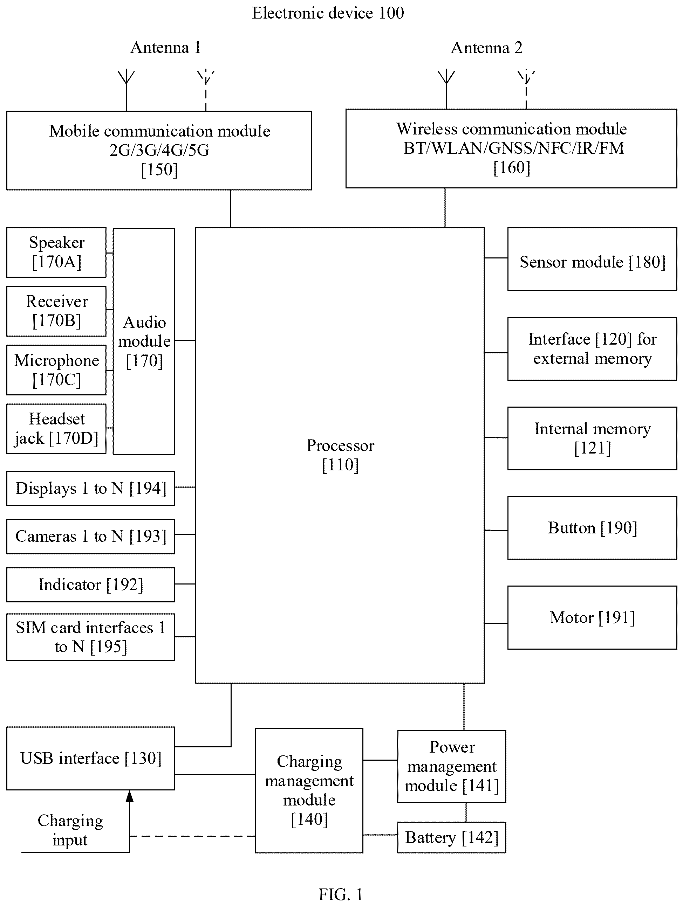

FIG. 1 is a diagram of a hardware structure of an electronic device 100 according to an embodiment of this application;

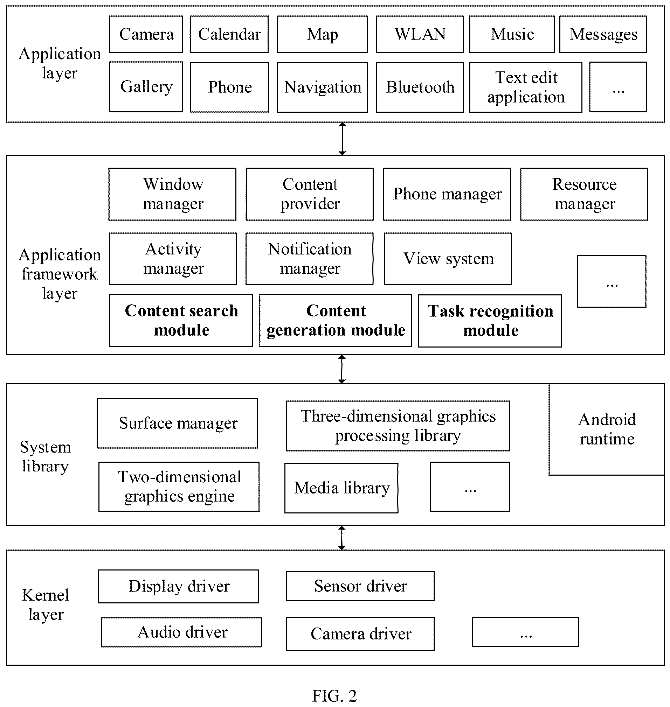

FIG. 2 is a block diagram of a software structure of the electronic device 100 according to an embodiment of this application;

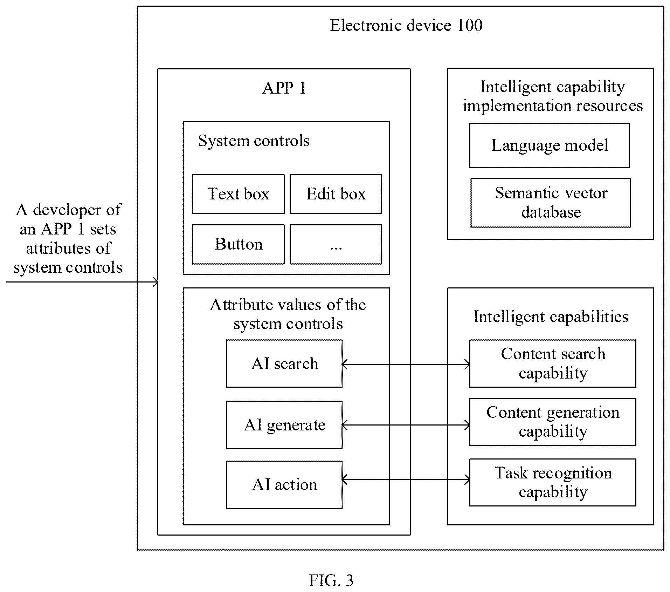

FIG. 3 is a diagram of setting an attribute of a system control according to an embodiment of this application;

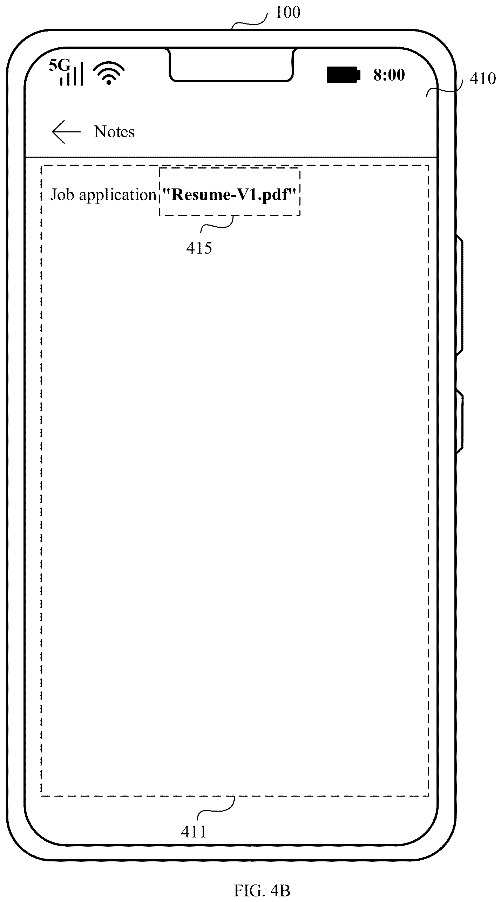

FIG. 4A and FIG. 4B are diagrams of a scenario for content search according to an embodiment of this application;
FIG. 5A to FIG. 5C are diagrams of a scenario for task recognition and content generation according to an embodiment of this application;

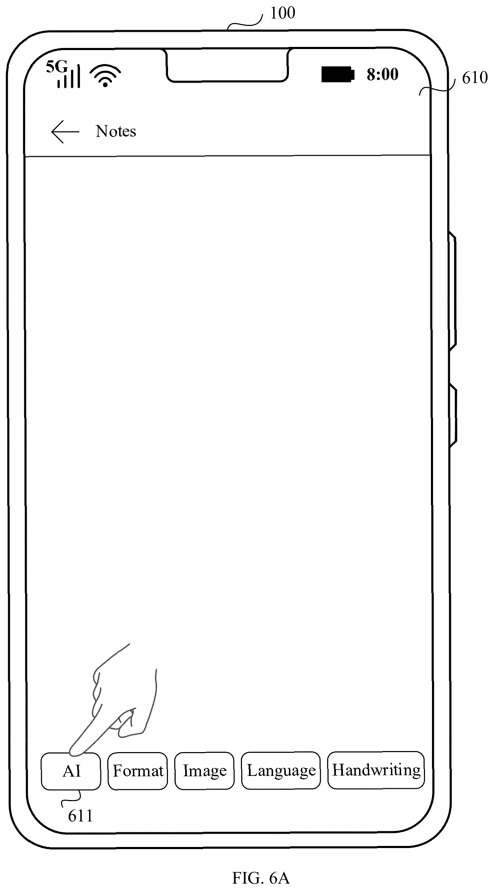

FIG. 6A to FIG. 6F are diagrams of a scenario for content search, content generation, and task recognition according to an embodiment of this application;

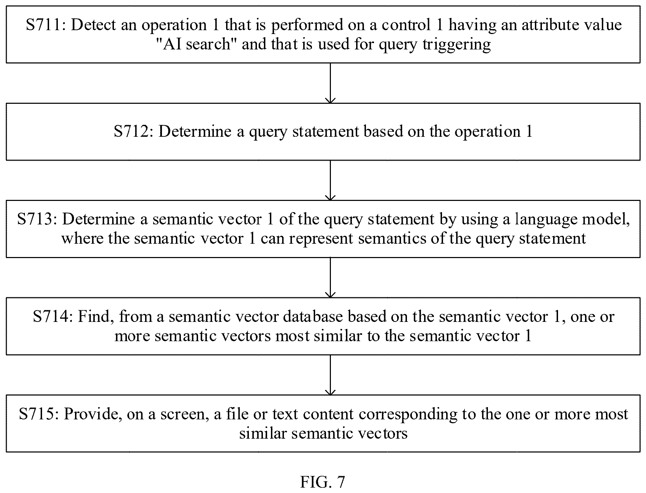

FIG. 7 is a flowchart of a content search method according to an embodiment of this application; and

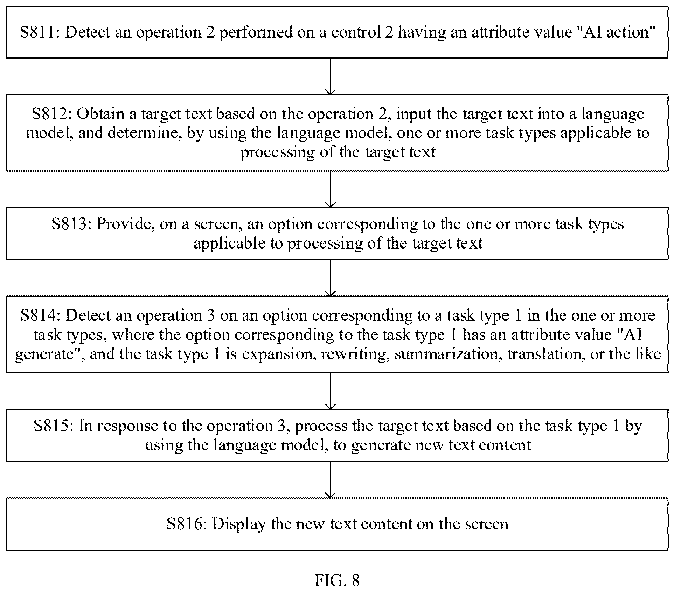

FIG. 8 is a flowchart of a task recognition and content generation method according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally represents an "or" relationship between the associated objects.

Reference to "an embodiment", "some embodiments", or the like described in this specification represents that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In an embodiment of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of an electronic device.

For ease of understanding, concepts of "system controls" in this application are first described herein.

An operating system is installed on the electronic device. The operating system is a set of interrelated system software programs that mainly manage and control operations of the electronic device, use and run hardware and software resources, and provide public services to organize user interaction. The operating system is an interface between a user and the electronic device. An APP on the electronic device is run based on the operating system.

The system control may be an interface control that is provided by the operating system for a developer and that is encapsulated. The system control helps the developer quickly develop and maintain consistency of interfaces of the APP in the operating system. For example, the system control may include but is not limited to a text box (TextView), an edit box (EditView), a button (Button), a list control (ListView), and the like.

The system control may be declared and used in a layout file. In addition to declaration, an attribute of the system control needs to be set, to control display effect of the system control on an interface. For example, the developer may declare the system control in the layout file, and set one or more of the following attributes of the system control: a width, a height, a color, a display location, and the like. In this way, the developer can set a layout of an application interface and a display style of each system control on the application interface based on a development requirement of the APP.

In some embodiments, the system control may be further configured to implement one or more specific functions, for example, a preset input listening function, a content search function, a content generation function, and a task recognition function. The preset input listening function may represent a function of monitoring a preset operation (for example, a tap operation or a touch and hold operation) performed on the system control, or a function of listening to content such as a preset character or text entered on the system control. The content search function may represent a function of searching for related content locally on the electronic device and/or on a cloud based on a query statement entered by the user. The content generation function may represent a function of generating a new text of a specified task type based on a target text. The task recognition function may represent a function of determining, based on the target text, one or more task types applicable to processing of the target text, to help the user select a corresponding task type to process the target text. The task type may include but is not limited to: expansion, rewriting, summarization, translation, meeting minutes, and the like.

If it is expected to use the system control to implement some specific functions, the developer can set an attribute corresponding to a needed function for the system control in the layout file. Further, the developer may add, to code, an implementation method of the attribute corresponding to the function. For example, in an Android^{®} operating system, the developer may add, to an activity (activity), the implementation method of the attribute corresponding to the function. A process of implementing a specific function by using the system control may include: (1) setting, in a layout file, an attribute corresponding to the specific function for the system control; (2) loading the layout file by using a super.setContentView () method; (3) obtaining a system control reference by using a super.findViewById () method; and (4) performing an operation on the control by using the system control reference, for example, adding a listener, invoking an interface for implementing a content search function, invoking an interface for implementing a content generation function, and invoking an interface for implementing a task recognition function. The foregoing method for implementing a specific function by using the system control is merely an example for description in this application, and this should not constitute a limitation on this application.

This application provides a system control operation method, to assist an APP developer in developing an APP that can provide an intelligent service, so as to reduce a development workload of the developer and improve development efficiency of the developer. The intelligent service may include one or more of the following: a content search service (or referred to as a content search function), a content generation service (or referred to as a content generation function), and a task recognition service (or referred to as a task recognition function).

Specifically, the operating system of the electronic device has one or more of the following intelligent capabilities: a content search capability, a content generation capability, and a task recognition capability. The content search capability may be used to implement the content search function. The content generation capability may be used to implement the content generation function. The task recognition capability may be used to implement the task recognition function. The operating system may provide, for an upper-layer application, interfaces for invoking these intelligent capabilities, so that the upper-layer application can provide corresponding intelligent services. A flag (flag) attribute is added to the system control provided by the operating system, so that the system control can implement the foregoing intelligent service. The flag attribute may include one or more of the following attribute values: AI search, AI generate, AI action, and the like. Different attribute values may correspond to different intelligent capabilities. For example, the attribute value "AI search" may correspond to the content search capability. The attribute value "AI generate" may correspond to the content generation capability. The attribute value "AI action" may correspond to the task recognition capability. If one or more attribute values of the foregoing flag attribute are set for the system control, the system control may provide a corresponding intelligent service.

Therefore, when performing development, a developer of any APP may set the foregoing flag attribute for the system control, that is, the system control can provide a corresponding intelligent service based on an intelligent capability of the operating system. The developer of the APP does not need to spend a lot of time and energy in building the foregoing intelligent capability, but only needs to utilize an intelligent capability integrated into the operating system to develop, into an intelligent application that can provide an intelligent service, the APP developed by the developer. The foregoing method can help the developer develop APPs that meet diversified requirements (such as an information searching requirement and a text editing requirement) of users, greatly reduce a workload of the developer, and improve development efficiency of the developer.

The following describes a structure of an electronic device 100 in this application.

The electronic device 100 may be a mobile phone, a tablet computer, a notebook, a smartwatch, an ultra-mobile personal computer (ultra-mobile personal computer, UMPC), a netbook, a personal digital assistant (personal digital assistant, PDA), or the like. A specific type of the electronic device 100 is not limited in embodiments of this application.

**FIG. 1** **is an example of a diagram of a hardware structure of the electronic device 100.**

As shown in FIG. 1, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may also be disposed in the processor 110, and is configured to store instructions and data. In some embodiments, the memory in the processor 110 is a cache. The memory may store instructions or data just used or cyclically used by the processor 110. If the processor 110 needs to use the instruction or the data again, the processor may directly invoke the instruction or the data from the memory. This avoids repeated access, reduces a waiting time of the processor 110, and improves system efficiency.

In this application, the memory may store a computer program, so that the controller or the processor can implement the system control operation method in this application by using an interface or a protocol.

For example, the computer program stored in the memory may be used to obtain a query statement, determine semantics of the query statement, find a related file locally on the electronic device 100 and/or on a cloud based on the semantics of the query statement, extract, from the related file, information to be queried by the query statement, recognize a purpose of the information to be queried by the query statement, and provide a corresponding function control for a user to use the queried information.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing an audio through the headset.

The charging management module 140 is configured to receive a charging input from the charger. The charger may be a wireless charger or a wired charger. The charging management module 140 may further supply power to the electronic device through the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100, for example, image recognition, facial recognition, speech recognition, text understanding, and text generation, may be implemented through the NPU.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a content search function, a text editing function, or a language instruction recognition function), and the like. In some embodiments, the program storage region may further store a program for implementing a language model and a program for implementing the foregoing intelligent capability. The data storage region may store data (such as audio data and a phone book) created when the electronic device 100 is used, and the like. In some embodiments, the data storage region may further store a semantic vector database. The semantic vector database may store a semantic vector associated with a local file of the electronic device 100 and/or a cloud file. In addition, the internal memory 121 may include a high-speed random access memory, and may further include a non-volatile memory, for example, at least one magnetic disk storage component, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a state of charge change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as calling and data communication. In some examples, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android^{®} system with a layered architecture is used as an example to illustrate the software structure of the electronic device 100.

**FIG. 2** **is an example of a block diagram of a software structure of the electronic device 100.**

In a layered architecture, software is divided into several layers, and each layer has a clear role and task. The layers communicate with each other through a software interface. In some embodiments, the Android^{®} system is divided into four layers that are respectively an application layer, an application framework layer, an Android runtime (Android Runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Text edit, and Messages. The text edit application may perform text editing and creation.

In some embodiments, the text edit application may provide a content search function. In this way, when performing text editing in the text edit application, a user may search for local content of the electronic device 100 and/or content on the cloud at any time, to search for information needed for text editing. Searching for the local content of the electronic device 100 may represent searching for content stored on the electronic device 100, for example, an image in the Gallery application, notes information in a notes application, or a document in a File application of the electronic device 100. Searching for the cloud content may include searching for content in a cloud storage space associated with the electronic device 100. For example, a device account is logged in to the electronic device 100. The electronic device 100 may search for a cloud storage space of the device account. For another example, a cloud disk application account is logged in to a cloud disk application of the electronic device 100. The electronic device 100 may search for a cloud storage space of the cloud disk application account. The cloud storage space may also be referred to as a cloud disk, a web disk, or the like. Optionally, searching for the cloud content may further include searching for web page content. The web page content may represent content on the internet, for example, news, a commodity, an address, and a paper on the internet. A range in which the electronic device 100 can perform searching is not limited in embodiments of this application.

In some embodiments, the text edit application may further provide a content generation function. In this way, when performing text editing, the user may perform corresponding processing on a target text. For example, processing such as expansion, rewriting, summarization, and translation is performed on the target text.

In some embodiments, the text edit application may further provide a task recognition function, to recognize a requirement of the user for text editing, and further provide a proper task type used for processing the target text for the user. In this way, when the user needs to process the target text in a text editing process, the user can quickly find a needed task type to process the target text, and does not need to search for the needed task type one by one in a large quantity of task types. This can improve user experience of text editing.

In addition to the text edit application, the electronic device 100 may further include more other APPs that can provide one or more of the foregoing intelligent services.

The application framework layer provides an API and a programming framework for an application at the application layer. The application framework layer includes some predefined functions.

As shown in FIG. 2, the application framework layer may include a window manager, a content provider, a view system, a phone manager, a resource manager, a notification manager, an activity manager, a content search module, a content generation module, a task recognition module, and the like.

The window manager is configured to manage a window program. The window manager may obtain a size of a display, determine whether there is a status bar, perform screen locking, take a screenshot, or the like.

The content provider is configured to: store and obtain data, and enable the data to be accessible to an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including a notification icon of Messages may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar (for example, a pull-down notification bar), and may be configured to convey a notification-type message, which may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is made, the electronic device vibrates, or the indicator blinks.

The activity manager is responsible for managing an activity (activity), and is responsible for starting, switching, and scheduling each component in a system, and managing and scheduling an application. The activity manager can be invoked by an upper-layer application to start a corresponding activity.

The content search module may be configured to provide, for the upper-layer application, an interface for invoking a content search capability. The application may invoke the content search capability of the operating system through the interface, to provide a content search function for the user.

The content generation module may be configured to provide, for the upper-layer application, an interface for invoking a content generation capability. The application may invoke a content generation capability of the operating system through the interface, to provide a content generation function for the user.

The task recognition module may be configured to provide, for the upper-layer application, an interface for invoking a task recognition capability. The application may invoke the task recognition capability of the operating system through the interface, to provide a task recognition function for the user.

The Android runtime includes a core library and a virtual machine. The Android runtime is responsible for scheduling and management of the Android system.

The core library includes two parts: a function that needs to be invoked in a Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

**FIG. 3** **is an example of a diagram of setting a system control attribute based on an intelligent capability provided by an operating system according to an embodiment of this application.**

As shown in FIG. 3, an interface of an APP 1 may include one or more of the following system controls: a text box, an edit box, a button, and the like. For example, the APP 1 may be an application like a text edit application, a social communication application, or a browser application. A type of the APP 1 is not limited in embodiments of this application.

In a development process, a developer of the APP 1 may set attributes of system controls in the APP 1. In addition to setting attributes (such as a width, a height, a color, and a location) related to a display style of the system control, the developer may further set an attribute corresponding to a function that needs to be implemented by the system control.

For example, if the developer expects that a system control in the APP 1 can provide the foregoing intelligent service, the developer may set a flag attribute for the system control, and set an attribute value of the flag attribute of the system control to an attribute value corresponding to the intelligent service that needs to be provided by the system control. Further, the developer may add, to an activity, an implementation method of the attribute value corresponding to the intelligent service, so that the system control can invoke an interface of the intelligent capability to provide the corresponding intelligent service.

The attribute value of the flag attribute may include AI search, AI generate, and AI action. The operating system of the electronic device 100 has intelligent capabilities such as a content search capability, a content generation capability, and a task recognition capability. The attribute value "AI search" may correspond to the content search capability. The attribute value "AI generate" may correspond to the content generation capability. The attribute value "AI action" may correspond to the task recognition capability. A name of the attribute value is merely an example for description in this application, and this should not constitute a limitation on this application.

For example, the developer sets an attribute value of a flag attribute of a button to AI action. In this case, the button may provide a task recognition function. In response to an operation performed on the button, for example, a tap operation, the electronic device 100 may invoke the task recognition capability, determine, based on a target text, one or more task types applicable to processing of the target text, and provide a corresponding task option for a user to select.

In some embodiments, the developer may set the flag attribute for the system control in a layout file of the system control. For example, the developer may add "android:flag="AI search"" to the layout file of the system control, to add a flag attribute whose attribute value is AI search to the system control. The developer may add "android:flag="AI generate"" to the layout file of the system control, to add a flag attribute whose attribute value is AI generate to the system control. The developer may add "android:flag="AI action"" to the layout file of the system control, to add a flag attribute whose attribute value is AI action to the system control.

In some embodiments, a plurality of attribute values of the foregoing flag attribute may be set for one system control. In other words, one system control can provide a plurality of intelligent services for the user. For example, if the developer adds a flag attribute whose attribute value is AI search and AI generate to a system control, the system control can provide both a content search function and a content generation function.

Implementation methods of the content search capability, the content generation capability, and the task recognition capability are described in subsequent embodiments. Details are not described herein.

As shown in FIG. 3, the electronic device 100 may store an intelligent capability implementation resource. The intelligent capability of the operating system of the electronic device 100 may be implemented based on the intelligent capability implementation resource. The intelligent capability implementation resource may include a language model and a semantic vector database.

The language model may be an artificial intelligence (artificial intelligence, AI) model used for processing a language text (or a symbol system), and may be used to generate, based on prompt (prompt) information, a text that meets a requirement, and ensure that an output result is related to the prompt. The language model may include a language model implemented based on a probability theory and statistics (namely, a statistical language model), a language model implemented based on deep learning and a neural network (namely, a neural network language model), and the like. An implementation method of the language model is not limited in embodiments of this application. For example, the electronic device 100 may implement a system control operation method in this application by using a large language model (large language model, LLM). The LLM may be a neural network model, and may learn syntax and semantics of a natural language, to generate a human-readable text. The LLM may be obtained through training based on a large-scale corpus. The corpus may include massive text data. The LLM can process various natural language processing tasks, such as natural language generation, text error correction, text classification, text summarization, machine translation, and speech recognition.

The foregoing prompt may be a human-understandable natural language (namely, a hard prompt (hard prompt/discrete prompt)). For example, the prompt may be a text or a statement in the natural language. Alternatively, a prompt may be machine-readable content, and belongs to a non-natural language (that is, a soft prompt (soft prompt/continuous prompt)). For example, the soft prompt may be an embedding (embedding), which transforms a word into a semantic vector representation that can be processed by a computer. The hard prompt is more explainable. The soft prompt can more flexibly eliminate a parameter limitation of the language model. The prompt may be used to start and guide the language model to generate output of a specified type, topic, or format. For example, in a natural language processing field, the prompt may include a group of questions and answers or task descriptions. For example, the prompt is "Give three names to a pet" or "Translate this sentence from English to French". For another example, the prompt may further include a question and answer example. The prompt to which the task description "Give three names to a pet" belongs may include question and answer examples: "Pet type: Cat, Pet name: Name 1, Name 2, and Name 3"; and "Pet type: Dog, Pet name: Name 4, Name 5, and Name 6". It may be understood that the question and answer example included in the prompt may be used to guide the language model to answer a question of the user in a manner of the question and answer example. The language model may generate, based on the prompt, a text that meets a requirement and ensure that an output result is related to the prompt.

The semantic vector database may store a semantic vector associated with a local file of the electronic device 100 and/or a cloud file. One file may be associated with one or more semantic vectors.

In some embodiments, the electronic device 100 may establish a semantic vector database. Specifically, the electronic device 100 may obtain the local file of the electronic device 100 and/or the cloud file, and perform semantic vector extraction on the obtained file by using a semantic vector extraction model. The electronic device 100 may store an extracted semantic vector in the semantic vector database.

The semantic vector extraction model may be used to extract a semantic vector of given content. The given content may include but is not limited to data of a type like a text, a table, or an image. The semantic vector extraction model may be a neural network-based model. An implementation of the semantic vector extraction model is not limited in embodiments of this application. The electronic device 100 inputs a segment of content in the semantic vector extraction model, and may obtain a semantic vector of the segment of content by using the semantic vector extraction model. The semantic vector of the segment of content may represent semantics of the segment of content. For example, the semantics of the segment of content may include an overview of information described by the segment of content (a subject or a topic of the segment of content). For example, the electronic device 100 inputs an introduction text of a cat in the semantic vector extraction model, to obtain a semantic vector of the text that may indicate that the text is a cat introduction text.

In some embodiments, one file may include a plurality of pieces of content (or referred to as a plurality of data segments). The electronic device 100 may split content in one file, and determine a semantic vector associated with each data segment obtained after splitting. In this way, one file may be associated with a plurality of semantic vectors. For example, one text file may include a plurality of paragraphs of text. The electronic device 100 may split the text file into paragraphs, and extract, by using the semantic vector extraction model, a semantic vector associated with each paragraph. It may be understood that different paragraphs or different chapters in one text file may express different subjects. For example, in one text file, a first paragraph describes cat species, and a second paragraph describes cat life habits. After the file is split, the semantic vector of the data segment obtained after splitting is extracted, so that the electronic device 100 can more accurately find, when providing the content search function, content that the user expects to search for.

A granularity of splitting a file is not limited in embodiments of this application. For example, the granularity of splitting a file may include but is not limited to: a sentence by text, a paragraph by text, a chapter by text, a page by file, a row by table, a column by table, and the like.

Optionally, the electronic device 100 may alternatively use a file as a whole, and extract, by using the semantic vector extraction model, a semantic vector associated with the file. In other words, one file may be associated with one semantic vector.

Optionally, the semantic vector database may alternatively be established by a device other than the electronic device 100, for example, a cloud server. After establishing the semantic vector database, the cloud server may send the semantic vector database to the electronic device 100.

In some embodiments, when a file locally stored in the electronic device 100 changes, or a file stored in a cloud storage space associated with the electronic device 100 changes, the electronic device 100 may update the foregoing semantic vector database. The foregoing file change may include but is not limited to: adding a file, changing content in a file, deleting an existing file, and the like.

It can be learned from FIG. 3 that the electronic device 100 stores the intelligent capability implementation resource. Based on the intelligent capability implementation resource, the operating system of the electronic device 100 may provide an intelligent capability for an upper-layer application. When performing development, a developer of any APP may set the foregoing flag attribute for the system control, that is, the system control can provide a corresponding intelligent service based on an intelligent capability of the operating system. The intelligent capability integrated into the operating system can help the developer develop APPs that meet diversified requirements (such as an information searching requirement and a text editing requirement) of users, greatly reduce a workload of the developer, and improve development efficiency of the developer.

The following describes some scenarios of using an intelligent service based on a system control to which a flag attribute is added according to an embodiment of this application.

Herein, a system control in a notes application is specifically used as an example for description. For a system control, in another APP, to which a flag attribute is added, refer to the system control in the notes application.

**FIG. 4A** **and** **FIG. 4B** **are an example of diagrams of a scenario for content search.**

As shown in FIG. 4A, the electronic device 100 may display a user interface 410 of a notes application. A system control on the user interface 410 may include an edit box 411. The edit box 411 may be used for text inputting and editing. A flag attribute whose attribute value is "AI search" may be added to the edit box 411. In other words, the edit box 411 may provide a content search function.

In some embodiments, a user may trigger the content search function by entering a preset symbol in the edit box 411. For example, the user enters a preset symbol 412 in the edit box 411. The preset symbol 412 may be "/@". The user may enter a query statement after the preset symbol 412, to search for content that the user expects to find. When the preset symbol 412 is detected in the edit box 411, the electronic device 100 may detect whether the edit box 411 has the flag attribute whose attribute value is "AI search". If the edit box 411 has the flag attribute whose attribute value is "AI search", the electronic device 100 may determine text content after the preset symbol 412 as the query statement.

As shown in FIG. 4A, the text content after the preset symbol 412 in the edit box 411 is a text 413. Content of the text 413 is "Resume". The electronic device 100 may use the text 413 as a query statement, and invoke a content search capability of an operating system to search, locally on the electronic device 100 and/or on a cloud, for content such as a file or a text associated with the query statement.

The electronic device 100 may display a search result on a screen. For example, the text 413 is used as a query statement, the electronic device 100 may find a resume-related file shown in FIG. 4A. The electronic device 100 may display a list box 414. The list box 414 may include an option 414A, an option 414B, and an option 414C. Different options in the list box 414 may respectively correspond to different files found by the electronic device 100. This is not limited to files corresponding to the option 414A to the option 414C. The electronic device 100 may further display more or less found content in the list box 414. For example, in response to an operation of sliding upward or downward in the list box 414, the electronic device 100 may display, in the list box 414, an option corresponding to another search result.

The user may select, from the list box 414, a search result needed by the user. If the search result currently displayed in the list box 414 does not include content expected by the user, the user may adjust the text after the preset symbol 412 in real time, to change the query statement until the content expected by the user is found.

As shown in FIG. 4A, in response to an operation on the option 414A, for example, a tap operation or a touch operation, the electronic device 100 may display the user interface 410 shown in FIG. 4B. The electronic device 100 may delete the preset symbol 412 and the text 413 shown in FIG. 4A, and display a text 415 at a location at which the preset symbol 412 and the text 413 are displayed. Content of the text 415 may be a name of a file corresponding to the option 414A selected by the user in FIG. 4A, for example, "Resume-V1.pdf".

In some embodiments, in response to an operation on the text 415, for example, a tap operation, the electronic device 100 may open the file "Resume-V1.pdf" and display content of the file.

It should be noted that the preset symbol used to trigger the content search function is merely an example for description in this application, and this should not constitute a limitation on this application. The preset symbol may alternatively be other content. The preset symbol may be a single symbol, for example, "/", "@", or "#". The preset symbol may alternatively be a combined symbol, for example, "/#" or "@#". This is not limited to the foregoing preset symbol. When detecting another preset operation, the electronic device 100 may also determine a query statement for searching. For example, the preset operation may be an operation on a preset shortcut key. In response to the operation on the preset shortcut key, the electronic device 100 may use partial or all text in the edit box 411 as a query statement for searching.

It can be learned from the scenario shown in FIG. 4A and FIG. 4B that, when the edit box 411 can provide the content search function, the user may enter a query statement in the edit box 411 at any time in a process of text editing in the edit box 411, to query information needed by the user, and does not need to exit a text editing interface to search for the information. In addition, the electronic device 100 may insert the found content into the edit box 411. The content search function can help the user quickly search for the needed information during text editing, and reduce a case in which a text editing idea of the user is interrupted due to information searching. The foregoing method can effectively improve user experience of text editing and improve efficiency of text editing of the user.

**FIG. 5A to FIG. 5C** **are an example of diagrams of a scenario for task recognition and content generation.**

As shown in FIG. 5A, the electronic device 100 may display a user interface 510 of a notes application. The user interface 510 may include an edit box 511. A text 512 may be entered in the edit box 511. For example, content of the text 512 may be "A cat catches a mouse". The content of the text 512 is merely an example for description in this application. In response to an operation of selecting the text 512, the electronic device 100 may display a function option box 513. The function option box 513 may include system controls: a smart write control 513A, a copy control 513B, and a paste control 513C.

A flag attribute whose attribute value is "AI action" may be added to the smart write control 513A. In other words, the smart write control 513A may provide a task recognition function.

In some embodiments, in response to an operation on the smart write control 513A, for example, a tap operation, the electronic device 100 may use the selected text 512 as a target text, and invoke a task recognition capability of an operating system, to determine one or more task types applicable to processing of the text 512. The electronic device 100 may display, on a display, an option corresponding to the determined task type.

For example, the electronic device 100 determines that the task type applicable to processing of the text 512 includes: expansion and rewriting. The electronic device 100 may display a task option box 514 shown in FIG. 5B. The task option box 514 may include an expand control 514A and a rewrite control 514B.

The expand control 514A may be used to perform text expansion based on the text 512, to generate a new text obtained after expansion. A flag attribute whose attribute value is "AI generate" may be added to the expand control 514A. In other words, the expand control 514A may provide a content generation function.

The rewrite control 514B may be configured to modify a representation of the text 512, to generate a new text obtained after rewriting. The flag attribute whose attribute value is "AI generate" may be added to the rewrite control 514B. In other words, the rewrite control 514B may provide the content generation function.

In some embodiments, in response to an operation on the expand control 514A shown in FIG. 5B, for example, a tap operation, the electronic device 100 may use the selected text 512 as the target text, and invoke a content generation capability of the operating system, to generate an expanded text of the text 512. The electronic device 100 may display the expanded text on the screen.

For example, as shown in FIG. 5C, in response to the operation on the expand control 514A shown in FIG. 5B, the electronic device 100 may create a new edit box 515 on the user interface 510, and display the expanded text of the text 512 in the edit box 515.

In some embodiments, the flag attribute whose attribute value is "AI action" may be added to the edit box 515. In other words, the edit box 515 may provide the task recognition function. When a text is entered in the edit box 515, the electronic device 100 may use the text in the edit box 515 as the target text, invoke the task recognition capability of the operating system, to determine one or more task types applicable to processing of the text in the edit box 515.

For example, the electronic device 100 determines that the task type applicable to processing of the text in the edit box 515 includes rewriting, summarization, and insertion. The electronic device 100 may display a task option box 516 shown in FIG. 5C. The task option box 516 may include a rewrite control 516A, a summarize control 516B, and an insert control 516C.

For the rewrite control 516A, refer to the rewrite control 514B shown in FIG. 5B.

The summarize control 516B may be used to summarize the text in the edit box 515 and generate a new text obtained after summarization. The flag attribute whose attribute value is "AI generate" may be added to the summarize control 516B. In other words, the summarize control 516B may provide the content generation function.

The electronic device 100 may replace the original text in the edit box 515 with the new text obtained after summarization or the new text obtained after rewriting. Alternatively, the electronic device 100 may display, at a location after the original text in the edit box 515, the new text obtained after summarization or the new text obtained after rewriting. A manner of displaying the new text obtained after rewriting and the new text obtained after summarization is not limited in embodiments of this application.

The insert control 516C may be used to insert the text in the edit box 515 into the edit box 511. For example, in response to an operation on the insert control 516C, the electronic device 100 may insert, after the text 512, the text in the edit box 515.

In some embodiments, the target text that is in the edit box 515 and that is used for content regeneration may be selected by a user. For example, the user may select partial text in the edit box 515. Then, the electronic device 100 may use the selected partial text as the target text, and invoke the task recognition capability of the operating system, to determine one or more task types applicable to processing of the target text.

It can be learned from FIG. 5B and FIG. 5C that, when the target text changes, a task type that is determined by the electronic device 100 and that is applicable to the target text may change. For example, when content of the target text is less, the user may need to expand the target text. When content of the target text is more, the user may need to summarize the target text. When the target text is in a foreign language (for example, English), the user may need to translate the target text.

It should be noted that task types corresponding to controls in the task option box 514 shown in FIG. 5B and the task option box 516 shown in FIG. 5C are merely examples for description in this application, and these should not constitute a limitation on this application.

It can be learned from the scenario shown in FIG. 5A to FIG. 5C that the electronic device 100 may estimate, based on the target text, a requirement of the user for processing the target text, to provide, for the user, a proper task type used for processing the target text. In this way, when the user needs to process the target text in a text editing process, the user can quickly find a needed task type to process the target text, and does not need to search for the needed task type one by one in a large quantity of task types. This can improve user experience of text editing.

In addition, in a process of editing text in the edit box 511, the user may select a corresponding text at any time to perform processing such as expansion, rewriting, summarization, or translation, and does not need to exit a text editing interface to perform re-creation on the existing text. This can improve efficiency of text editing of the user.

In some embodiments, a plurality of attribute values of the flag attribute may be set for one system control. In other words, one system control can provide a plurality of intelligent services. The following describes a scenario of using an intelligent service based on a system control to which a plurality of flag attribute values are added.

**FIG. 6A to FIG. 6F** **are an example of diagrams of a scenario for content search, content generation, and task recognition.**

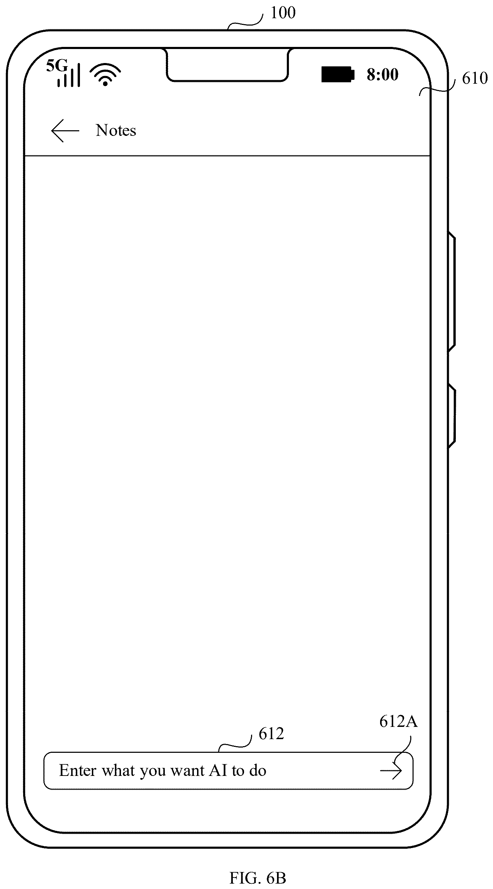

As shown in FIG. 6A, the electronic device 100 may display a user interface 610 of a notes application. The system control on the user interface 610 may include an AI control 611, a style control, an image control, and the like. The style control may be used to select a display style like a font or a font size of an input text. The image control may be used to insert an image during text editing. The AI control 611 may be used to invoke an AI edit box, to input, in the AI edit box, a language instruction indicating the electronic device 100 to perform. In response to an operation, for example, a tap operation, on the AI control 611 shown in FIG. 6A, the electronic device 100 may display an AI edit box 612 shown in FIG. 6B. The user may enter, in the AI edit box 612, a language instruction that is expected to be executed by the electronic device 100.

As shown in FIG. 6B, the AI edit box 612 may include a sending control 612A. When a language instruction is entered in the AI edit box 612, in response to an operation on the sending control 612A, the electronic device 100 may recognize and execute the language instruction in the AI edit box 612.

In some embodiments, a flag attribute whose attribute value is "AI search" may be added to the AI edit box 612. In other words, the AI edit box 612 may provide a content search function.

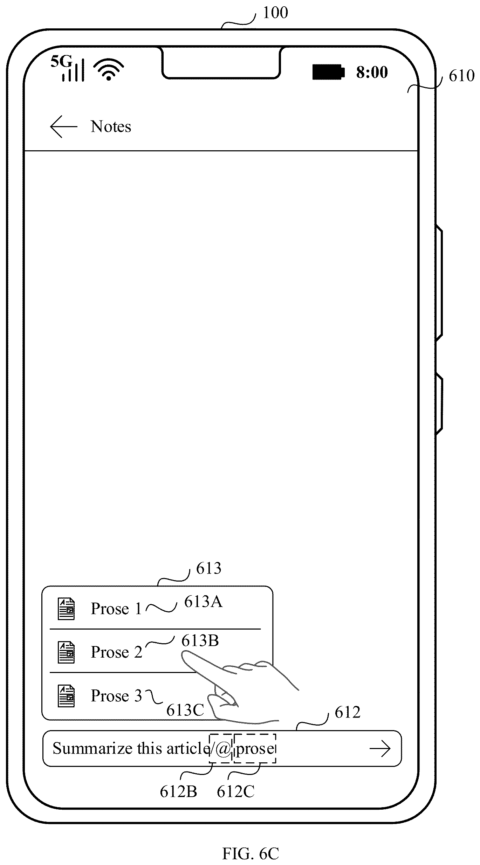

As shown in FIG. 6C, the user enters a text "Summarize this article" in the AI edit box 612, and further enters a preset symbol 612B. The preset symbol 612B may be "/@". The preset symbol 612B may be used to trigger the content search function. The user may enter a query statement after the preset symbol 612B, to search for content that the user expects to find. When the preset symbol 612B is detected in the AI edit box 612, the electronic device 100 may detect whether the AI edit box 612 has the flag attribute whose attribute value is "AI search". If the AI edit box 612 has the flag attribute whose attribute value is "AI search", the electronic device 100 may determine text content after the preset symbol 612B as the query statement. For the preset symbol 612B, refer to the preset symbol 412 shown in FIG. 4A.

As shown in FIG. 6C, the text content after the preset symbol 612B in the AI edit box 612 is a text 612C. Content of the text 612C is "Prose". The electronic device 100 may use the text 612C as a query statement, and invoke a content search capability of an operating system to search, locally on the electronic device 100 and/or on a cloud, for content such as a file or a text associated with the query statement.

The electronic device 100 may display a search result on a screen. For example, the text 612C is used as a query statement, the electronic device 100 may find a prose-related file shown in FIG. 6C. The electronic device 100 may display a list box 613. The list box 613 may include an option 613A, an option 613B, and an option 613C. Different options in the list box 613 may respectively correspond to different files found by the electronic device 100.

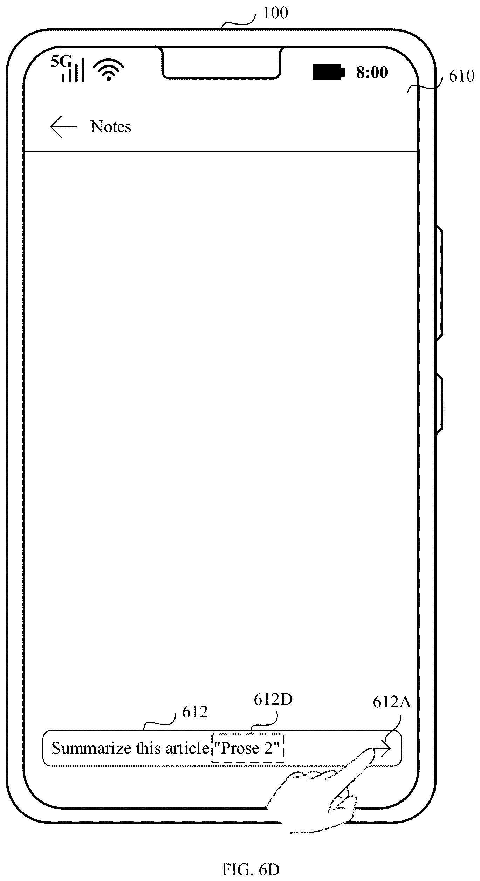

In response to an operation on the option 613B shown in FIG. 6C, for example, a tap operation or a touch operation, the electronic device 100 may display the user interface 610 shown in FIG. 6D. The electronic device 100 may delete the preset symbol 612B and the text 612C shown in FIG. 6C, and display a text 612D at a location at which the preset symbol 612B and the text 612C are displayed. Content of the text 612D may be a name of a file corresponding to the option 613B selected by the user in FIG. 6C, for example, "Prose 2".

In some embodiments, a flag attribute whose attribute value is "AI generate" may be added to the AI edit box 612. In other words, the AI edit box 612 may provide a content generation function.

As shown in FIG. 6D, in response to the operation on the sending control 612A, the electronic device 100 may use the text (for example, "Summarize this article "Prose 2"") in the AI edit box 612 as a language instruction, to recognize and execute the language instruction. The electronic device 100 may recognize the language instruction by using a language model. A language instruction recognition method of the electronic device 100 is not limited in embodiments of this application.

The electronic device 100 may recognize that the language instruction in the AI edit box 612 is a language instruction for recreating the target text, and the target text is a text recorded in a file named "Prose 2". Further, the electronic device 100 may detect whether the AI edit box 612 has the flag attribute whose attribute value is "AI generate". If the AI edit box 612 has the flag attribute whose attribute value is "AI generate", the electronic device 100 may invoke a content generation capability, to summarize file content of "Prose 2", to generate a summarized text. The electronic device 100 may display the summarized text on the screen.

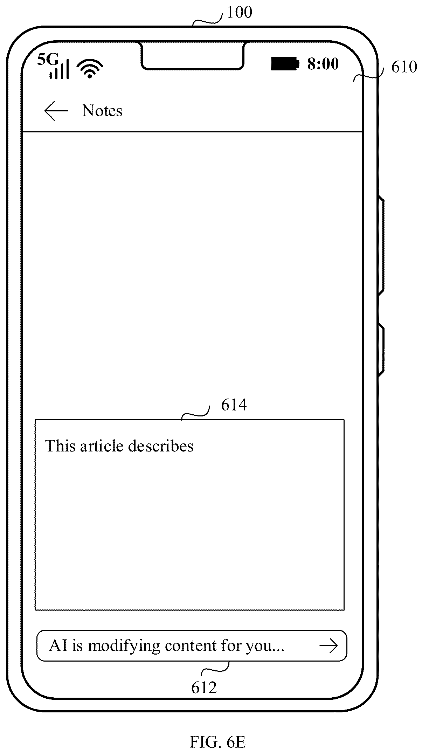

For example, as shown in FIG. 6E, in response to the operation on the sending control 612A shown in FIG. 6D, the electronic device 100 may create a new edit box 614 on the user interface 610. In a process of generating the summarized text, the electronic device 100 may generate and display the summarized text word by word in the edit box 614. Optionally, the electronic device 100 may further display, in the AI edit box 612, a prompt text "AI is modifying content for you..." shown in FIG. 6E, to notify the user that the electronic device 100 is executing the language instruction of the user, so as to generate the summarized text of "Prose 2".

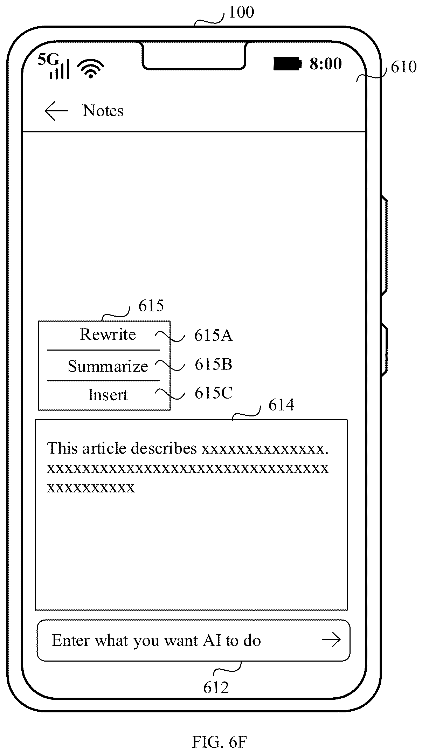

As shown in FIG. 6F, when the summarized text is generated, the electronic device 100 may display the complete summarized text in the edit box 614.

In some embodiments, a flag attribute whose attribute value is "AI action" may be added to the edit box 614. In other words, the edit box 614 may provide a task recognition function. When a text is entered in the edit box 614, the electronic device 100 may use the text in the edit box 614 as the target text, invoke a task recognition capability of the operating system, to determine one or more task types applicable to processing of the text in the edit box 614. For a scenario in which the edit box 614 implements the task recognition function, refer to the scenario in which the edit box 515 shown in FIG. 5C implements the task recognition function.

For example, the electronic device 100 determines that the task type applicable to processing of the text in the edit box 614 includes rewriting, summarization, and insertion. The electronic device 100 may display a task option box 615 shown in FIG. 6F. The task option box 615 may include a rewrite control 615A, a summarize control 615B, and an insert control 615C.

It can be learned from the scenario shown in FIG. 6A to FIG. 6F that, in a text editing process, the user may invoke the AI edit box 612 on a text editing interface at any time, and enter a language instruction in the AI edit box 612 to indicate the electronic device 100 to perform re-creation on the target text. In addition, when entering the language instruction in the AI edit box 612, the user may further query, by using the query statement, information needed by the user. This can improve efficiency of language instruction entering of the user. The system control (for example, the AI edit box 612) to which the plurality of flag attribute values are added may provide a plurality of intelligent services for the user. This effectively improves user experience of text editing.

**FIG. 7** **is an example of a flowchart of a content search method according to an embodiment of this application.**

As shown in FIG. 7, the method may include steps S711 to S715.

S711: Detect an operation 1 that is performed on a control 1 having an attribute value "AI search" and that is used for query triggering.

For the control 1, refer to the edit box 411 shown in FIG. 4A or the AI edit box 612 shown in FIG. 6C. For the operation 1, refer to an operation of entering the preset symbol 412 in the edit box 411 shown in FIG. 4A.

S712: Determine a query statement based on the operation 1.

For example, the operation 1 is the operation of entering the preset symbol 412 in the edit box 411 shown in FIG. 4A. The electronic device 100 may determine a text entered after the preset symbol 412 as the query statement. In some embodiments, the electronic device 100 may alternatively determine a text before the preset symbol 412 as the query statement. Alternatively, the electronic device 100 may prompt a user to select a text as the query statement. A query statement determining method of the electronic device 100 is not limited in embodiments of this application.

S713: Determine a semantic vector 1 of the query statement by using a language model, where the semantic vector 1 can represent semantics of the query statement.

In some embodiments, the electronic device 100 may determine file content information from the query statement by using the language model. The file content information may represent content described in a file that includes information to be queried by using the query statement. The file content information determined by using the query statement may indicate a semantic limitation, in the query statement, of content to be searched for by using the query statement. In other words, the file content information may be a condition that limits semantics or a meaning of a search result, and may be used by the electronic device 100 to find, based on the semantics, the search result needed by the query statement. File content information of a file may be determined from content described in the file. File content information of a file can represent semantics of the file or partial content in the file. File content information of a file may be seen after the file is opened.

Specifically, an input of the language model may include a query statement and a prompt. The prompt may indicate the language model to determine the file content information from the query statement. For example, the prompt may be: Please summarize given content as briefly as possible while maintaining a meaning described in the given content. The language model may output the file content information of the query statement. Then, the electronic device 100 may use the file content information as an input of a semantic vector extraction model, and obtain the semantic vector 1 of the query statement by using the semantic vector extraction model. For the semantic vector extraction model, refer to descriptions in the foregoing embodiment.

The foregoing method is merely an example of a method for determining the semantic vector of the query statement in this application, and this should not constitute a limitation on this application. The electronic device 100 may further determine the semantic vector of the query statement in another method.

S714: Find, from a semantic vector database based on the semantic vector 1, one or more semantic vectors most similar to the semantic vector 1.

The electronic device 100 may calculate a vector similarity, and determine the one or more semantic vectors, in the semantic vector database, most similar to the semantic vector 1. A vector similarity calculation method of the electronic device 100 is not limited in embodiments of this application. For example, the electronic device 100 may calculate a similarity between semantic vectors by using a method like a cosine similarity, a Euclidean distance, or a Pearson correlation coefficient, to find a semantic vector that is most similar to the semantic vector 1.

S715: Provide, on a screen, a file or text content corresponding to the one or more most similar semantic vectors.

The one or more semantic vectors most similar to the semantic vector 1 may include a semantic vector corresponding to a single file, and/or a semantic vector corresponding to one or more segments of text content in the file. The electronic device 100 may provide, on the screen, the file or text content corresponding to the one or more most similar semantic vectors. The electronic device 100 may display option controls corresponding to these files or text content. For details, refer to the list box 414 displayed by the electronic device 100 shown in FIG. 4A.

It can be learned from the method shown in FIG. 7 that the system control having the attribute value "AI search" may provide a content search function. The user may indicate, through an operation that is performed on the system control and that is used for query triggering, the electronic device 100 to query for information needed by the user. The content search function can improve user experience of information searching on the electronic device 100, and help the user quickly search for the needed information. When a system control in a text edit application (for example, a notes application) can provide the content search function, the system control can help the user quickly search for the needed information during text editing, and reduce a case in which a text editing idea of the user is interrupted due to information searching. The foregoing method can effectively improve user experience of text editing and improve efficiency of text editing of the user.

**FIG. 8** **is an example of a flowchart of a task recognition and content generation method according to an embodiment of this application.**

As shown in FIG. 8, the method may include steps S811 to S816.

### 1. (S811 to S813) Task recognition

S811: Detect an operation 2 performed on a control 2 having an attribute value "AI action".

For the control 2, refer to the smart write control 513A shown in FIG. 5A or the edit box 515 shown in FIG. 5C. For the operation 2, refer to the tap operation on the smart write control 513A shown in FIG. 5A, or an operation of entering a text in the edit box 515 shown in FIG. 5C.

In other words, if the control 2 is a system control whose type is a button, the operation 2 may include a tap operation or a touch operation on the control 2. If the control 2 is a system control whose type is an edit box, the operation 2 may include an operation of entering a text in the control 2.

S812: Obtain a target text based on the operation 2, input the target text into a language model, and determine, by using the language model, one or more task types applicable to processing of the target text.

In some embodiments, if the control 2 is the system control whose type is a button, the electronic device 100 may use a selected text (for example, the selected text 512 shown in FIG. 5A) on the current interface as the target text. If the control 2 is the system control whose type is an edit box, the electronic device 100 may use all text or a selected text in the control 2 as the target text. The method for obtaining the target text is not limited in embodiments of this application.

The electronic device 100 may input the target text into the language model. In addition, an input of the language model may further include a plurality of task types and a prompt. The task type entered into the language model may include but is not limited to: expansion, rewriting, summarization, translation, insertion, and the like. The prompt may be as follows: Give a target text and some task types, please determine task types to which the target text most likely belongs, provide no more than three task types for an answer, and do not use punctuation in the answer. In this way, the language model can select, from the foregoing given task types based on the prompt, a task type of the target text that the user most likely wants to process, and a quantity of selected task types may not exceed three. Content of the prompt is merely an example for description in this application, and this should not constitute a limitation on this application.

S813: Provide, on a screen, an option corresponding to the one or more task types applicable to processing of the target text.

For the option corresponding to the task type provided by the electronic device 100 on the screen, refer to the task option box 514 shown in FIG. 5B or the task option box 516 shown in FIG. 5C.

### 2. (S814 to S816) Content generation

S814: Detect an operation 3 on an option corresponding to a task type 1 in the one or more task types, where the option corresponding to the task type 1 has an attribute value "AI generate", and the task type 1 is expansion, rewriting, summarization, translation, or the like.

For the option corresponding to the task type 1, refer to the expand control 514A and the rewrite control 514B in the task option box 514 shown in FIG. 5B, or the rewrite control 516A and the summarize control 516B in the task option box 515 shown in FIG. 5C. For the operation 3, refer to the tap operation performed on the expand control 514A shown in FIG. 5B.

S815: In response to the operation 3, process the target text based on the task type 1 by using the language model, to generate new text content.

For example, if the task type 1 is expansion, the electronic device 100 may expand the target text by using the language model, and the generated new text content is an expanded text of the target text.

For another example, if the task type 1 is rewriting, the electronic device 100 may rewrite the target text by using the language model, and the generated new text content is a rewritten text of the target text.

For another example, if the task type 1 is summarization, the electronic device 100 may summarize the target text by using the language model, and the generated new text content is a summarized text of the target text.

For another example, if the task type 1 is translation, the electronic device 100 may translate the target text by using the language model, and the generated new text content is a translation text of the target text (for example, translating the target text in Chinese into English).

The electronic device 100 may determine the prompt based on the task type 1. For example, when the task type 1 is expansion, the content of the prompt may be: Please expand the given target text. When the task type 1 is rewriting, the content of the prompt may be: Please rewrite the given target text. When the task type 1 is summarization, the content of the prompt may be: Please summarize the given target text. When the task type 1 is translation (for example, Chinese-to-English), the content of the prompt may be: Please translate the given target text into English. The prompts corresponding to different task types are merely examples for description in this application, and these should not constitute a limitation on this application.

The electronic device 100 may input, into the language model, the prompt corresponding to the task type 1 and the target text. Then, the language model may process the target text based on the task type 1, to generate new text content.

S816: Display the new text content on the screen.

In some embodiments, the electronic device 100 may create a new edit box on the screen (referring to the edit box 515 shown in FIG. 5C), and display the new text content in the edit box. A new text content display method of the electronic device 100 is not limited in embodiments of this application.

It can be learned from the method shown in FIG. 8 that the system control having the attribute value "AI action" may provide a task recognition function. The user may indicate, through an operation performed on the system control, the electronic device 100 to filter and provide a task type of the target text that the user most likely wants to process. In this way, when the user needs to process the target text in a text editing process, the user can quickly find a needed task type to process the target text, and does not need to search for the needed task type one by one in a large quantity of task types. This can improve user experience of text editing.

The system control having the attribute value "AI generate" may provide a content generation function. The user may indicate, through an operation performed on the system control, the electronic device 100 to process the target text, to implement an intelligent output of personalized content. In this way, in the text editing process, the user can conveniently re-create the target text based on the content generation function provided by the system control, to improve efficiency of text editing.

It can be understood that the user interfaces described in embodiments of this application are merely example interfaces, and these constitute no limitation on the solutions of this application. In other embodiments, the user interfaces may use different interface layouts or may include more or fewer controls, or other function options may be added or reduced. Provided that the user interfaces are based on a same inventive idea provided in this application, all of the user interfaces fall within the protection scope of this application.

It should be noted that, if no contradiction or conflict occurs, any features or any parts of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A system control operation method, wherein the method is applied to an electronic device comprising a first application and a second application, and the method comprises:
implementing, by the electronic device, a first function in response to a first operation on a first system control comprised in the first application, wherein the first system control has a first attribute value, the first attribute value corresponds to the first function, and the first function comprises a content search function, a task recognition function, or a content generation function; and
implementing, by the electronic device, the first function in response to a second operation on a second system control comprised in the second application, wherein the second system control has the first attribute value.

2. The method according to claim 1, wherein an operating system of the electronic device has a first capability, the first capability is used to implement the first function, the first attribute value is associated with the first capability, and implementing, by the electronic device, the first function specifically comprises:
invoking, by the electronic device, the first capability, to implement the first function.

3. The method according to claim 1 or 2, wherein the first system control has a second attribute value, the second attribute value corresponds to a second function, the second function is different from the first function, and the second function comprises the content search function, the task recognition function, or the content generation function; and the method further comprises:
implementing, by the electronic device, the second function in response to a second operation on the first system control.

4. The method according to claim 3, wherein the operating system of the electronic device has a second capability, the second capability is used to implement the second function, the second attribute value is associated with the second capability, and implementing, by the electronic device, the second function specifically comprises:
invoking, by the electronic device, the second capability, to implement the second function.

5. The method according to any one of claims 1 to 4, wherein the first function is the content search function; and implementing, by the electronic device, the first function in response to the first operation on the first system control comprised in the first application specifically comprises:
determining, by the electronic device, a query statement in response to the first operation, and obtaining first content through searching based on the query statement; and
displaying, by the electronic device, the first content.

6. The method according to any one of claims 1 to 4, wherein the first function is the task recognition function, and implementing, by the electronic device, the first function in response to the first operation on the first system control comprised in the first application specifically comprises:
obtaining, by the electronic device, a first text in response to the first operation, and determining one or more task types used to process the first text, wherein the task type comprises one or more of the following: expansion, rewriting, summarization, translation, insertion, and meeting minutes; and
displaying, by the electronic device, an option corresponding to the one or more task types.

7. The method according to any one of claims 1 to 4, wherein the first function is the content generation function, the first system control indicates a first task type, the first task type comprises expansion, rewriting, summarization, translation, or meeting minutes, and implementing, by the electronic device, the first function in response to the first operation on the first system control comprised in the first application specifically comprises:
obtaining, by the electronic device, a second text in response to the first operation, and processing the second text based on the first task type, to generate a third text; and
displaying, by the electronic device, the third text.

8. An electronic device, wherein the electronic device comprises a memory and a processor, the memory is configured to store a computer program, and the processor is configured to invoke the computer program, so that the electronic device performs the method according to any one of claims 1 to 7.

9. A computer-readable storage medium, comprising instructions, wherein when the instructions are run on an electronic device, the electronic device is enabled to perform the method according to any one of claims 1 to 7.

10. A computer program product, wherein the computer program product comprises computer instructions, and when the computer instructions are run on an electronic device, the electronic device is enabled to perform the method according to any one of claims 1 to 7.
